# EUROPEAN PATENT SPECIFICATION

(11) **EP 3 367 371 B1**
(45) Date of publication and mention of the grant of the patent: **15.04.2020**
(21) Application number: 15906563.0
(22) Date of filing: 09.12.2015
(51) Int. Cl.: G09F 9/302, G09F 9/33, E04F 15/02, F16M 11/04, G09F 15/00

(54) **LED TILE SCREEN AND LED DISPLAY SCREEN BACK FRAME**
LED-TILE-BILDSCHIRM UND RÜCKSEITIGER RAHMEN FÜR LED-ANZEIGEBILDSCHIRM
ÉCRAN EN CARREAUX À DEL ET CADRE ARRIÈRE D'ÉCRAN D'AFFICHAGE À DEL

(30) Priority: 23.10.2015 CN 201520830719 U; 23.10.2015 CN 201510698786; 23.10.2015 CN 201510695238; 23.10.2015 CN 201510697834
(43) Date of publication of application: 29.08.2018
(73) Proprietor: HUNAN YESTECH OPTOELECTRONIC CO., LTD., Kaifu District Changsha Hunan 410012 (CN)
(72) Inventor: LIANG, Jun, Changsha Hunan 410005 (CN); YONG, Wenying, Changsha Hunan 410005 (CN); LIANG, Zhan, Changsha Hunan 410005 (CN); PENG, Bin, Changsha Hunan 410005 (CN)
(74) Representative: Hannke, Christian
(86) International application number: PCT/CN2015/096866
(87) International publication number: WO 2017/067047

(56) References cited:
- WO-A1-2005/095732
- CN-U- 202 917 114
- CN-U- 202 917 114
- CN-U- 203 160 412
- CN-U- 204 288 710
- US-A1- 2013 265 765

## Description

### FIELD OF THE INVENTION

The invention relates to the field of display technology, specifically to a back frame for LED display screens and a large-screen LED display screen.

### BACKGROUND OF THE INVENTION

With the development of society, LED display screens have been widely applied in occasions including sports venues, entertainment venues, television stations, arenas, party venues and the like.

During sports competitions, many billboards are usually arranged around the venues. Initially, the printed billboards which can only show fixed content are used. As the LED display technology developed, more and more billboards have adopted LED display screens. An LED display screen for courts usually comprises a support structure and a plurality of LED screen bodies fixed on the support structure. Due to the support structure, the LED screen body can be arranged on the ground in an inclined manner.

In entertainment venues, television stations, arenas and large party venues, large-screen LED display screens are usually required. The large-screen LED display screen is a flat panel display which comprises a plurality of LED display screen units arranged in a matrix, and is used to display information including characters, images, videos and the like. When in use, the large-screen LED display screen is usually mounted on the back frame for the LED display screen, or is fixedly mounted on a mounting frame of a building, to work as a medium for publishing information.

On the other hand, a LED floor tile screen (which is not part of the invention) is a display screen which can be laid on the ground and on which people can walk and step. It comprises a support structure and an LED screen body mounted on the support structure. The support structure of the LED floor tile screen can be fixedly mounted on the ground, and the LED floor tile screens can form a large-screen LED floor tile screen of hundreds of square meters, which may display video and animation effects including the gradual-change effect, flickering effect, scanning effect, color chasing effect, color flickering effect, random flickering effect, gradient effect and the like. Due to the flexible modular structure, the large-screen LED floor tile screen greatly enriches the display effects and is widely applied in occasions including KTV places, bars, clubs, evening shows, exhibition halls, lobbies, plazas, runway shows, various venues for stage performances and the like. The large-screen LED floor tile screen can be integrated with the floor, background wall, ceiling and the like, to realize a significant three-dimensional effect.

Coming back to LED display screens, the existing support structures for the LED display screen usually are steelwork frames formed by welding the steel tubes, steel plates and the like together. Such steelwork frames have relatively complex structures and poor flexibility, and are not available for a quick assembly/disassembly or transportation. Furthermore, since the area of the assembled large-screen LED display screen is limited by the area of the support frame, the area of the large-screen LED display screen has to be predetermined and cannot be adjusted at any time as required, and thus these large-screen LED display screens are inconvenient to use. WO 2005/095732 A1 discloses a framework for wooden deckings. CN 202 917 114 U discloses a light emitting diode (LED) display screen back supporting frame showing the features of the preamble of claim 1.

### SUMMARY OF THE INVENTION

The invention aims to solve the problems that the existing support structures for the LED screen body have complex structures and poor flexibility, and are not available for a quick assembly/disassembly or transportation, or for temporary adjustments according to specific requirements of the sites, and are inconvenient to use.

In order to solve the problems mentioned above, the invention provides a B-shaped support frame which comprises two first support bars and three second support bars, wherein the two first support bars are alternately and vertically connected with two of the second support bars in an end-to-end manner, and the other second support bar is vertically connected with the middles of the two first support bars.

Preferably, each second support bar is provided along its length direction with a plurality of through-holes at intervals, and both ends of each first support bar are respectively arranged with a plugging hole. Each second support bar comprises a top plate, a bottom plate which is opposite to the top plate, and two opposite side plates which are vertically connected with the bottom plate and the top plate, and the plurality of through-holes of each second support bar extend through the top plate and the bottom plate of the each second support bar.

Preferably, a plurality of B-shaped support frames are provided, and the plurality of B-shaped support frames are arranged in rows and columns in the length direction of the first support bar and in the length direction of the second support bar.

Preferably, in the length direction of the first support bar, two adjacent B-shaped support frames can be connected with each other by two first connecting members plugged into the corresponding plugging holes of the two B-shaped support frames, and both ends of each first connecting member are respectively arranged with a plugging section which can be plugged into the corresponding plugging hole.

Preferably, the plugging holes are limiting step holes, and correspondingly, the plugging sections of the first connecting member are limiting step sections.

Preferably, in the length direction of the second support bar, the two adjacent first support bars of the two adjacent B-shaped support frames are clamped by two second connecting members.

An example which does not form part of the invention is a support device which comprises a mounting frame, a base, a support bar and two connecting members, wherein the mounting frame comprises two aforesaid B-shaped support frames and two covering plates, the two B-shaped support frames are arranged in the length direction of the second support bar, the two covering plates are arranged on two sides of the two B-shaped support frames, and the covering plates further have their bottoms connected with the base; wherein the base comprises the aforesaid B-shaped support frame. It should be noted that the support device is described by way of example only and does not form a part of the present invention.

Herein, one end of the support bar is connected with the mounting frame by one of the connecting members, and the other end of the support bar is connected with the base by the other connecting member. When the mounting frame is supported by the support bar, an inclination angle is formed between the mounting frame and the ground, and the mounting frame is suspended.

Preferably, the connecting member comprises a slidable mounting member and a hinge member arranged on the slidable mounting member, wherein the slidable mounting member can be adjustably arranged on the mounting frame or on the base, the hinge member is hinged with the end of the support bar.

An example which does not form part of the invention is a LED display screen for courts, which comprises a plurality of LED screen bodies, wherein the court LED display screen further comprises the aforesaid support device; and one LED screen body is removably mounted on the front end face of the mounting part of each B-shaped support frame of the mounting frame by a fifth fastening component. It should be noted that the LED display screen for courts is described by way of example only and does not form a part of the present invention.

An example which does not form part of the invention is a support structure for LED floor tile screens, which comprises a plurality of the aforesaid B-shaped support frames, a plurality of first connecting members and a plurality of second connecting members, wherein the plurality of B-shaped support frames are arranged in rows and columns in the length direction of the first support bar and in the length direction of the second support bar. It should be noted that the support structure for LED floor tile screens is described by way of example only and does not form a part of the present invention.

Herein, in the length direction of the first support bar, two adjacent B-shaped support frames are detachably connected by two of the first connecting members.

Herein, in the length direction of the second support bars, two adjacent B-shaped support frames are detachably connected by two of the second connecting members.

An example which does not form part of the invention is a LED floor tile screen which comprises the aforesaid support structure for LED floor tile screen and an LED screen body, wherein the front part of each B-shaped support frame is provided with two mounting faces, and one LED screen body is removably mounted on each mounting face. It should be noted that the LED floor tile screen is described by way of example only and does not form a part of the present invention.

In order to solve the technical problems mentioned above, the invention provides a back frame for LED display screens, which comprises two support structures and a bottom beam, wherein the two support structures are oppositely arranged at an interval, and both ends of the bottom beam are respectively removably connected with the two support structures.

Herein each support structure comprises two vertical support frames, a plurality of transverse connecting frames, a base and a plurality of first connecting members. The two vertical support frames are vertically and oppositely arranged on the base. The vertical support frame comprises a plurality of support frame units which are successively arranged along the vertical direction, and a plurality of first connecting members. In the vertical direction, two adjacent support frame units are connected by two of the first connecting members, and the plurality of transverse connecting frames are horizontally and successively arranged from top to bottom between the two vertical support frames.

Herein, the support frame units and the transverse connecting frames are the aforesaid B-shaped support frames.

Preferably, the base comprises two support underframes which are oppositely arranged. By two second connecting members, each support underframe is vertically and removably connected with a support frame unit which is at the lowest end of the vertical support frame.

Preferably, the back frame for LED display screen further comprises two weight boxes, each of which is arranged on one support structure and is disposed between the two vertical support frames and close to the base.

In order to solve the same technical problems, the invention further provides a large-screen LED display screen which comprises a plurality of LED screen bodies and the aforesaid back frame for LED display screen, wherein the plurality of LED screen bodies are removably mounted on the back frame for LED display screen.

Due to the configuration of the B-shaped support frame, a quick assembly and disassembly of a plurality of B-shaped support frames is available for the B-shaped support frame, the support device, the LED display screen for courts, the support structure for LED floor tile screen, the LED floor tile screen, the back frame for LED display screen and the large-screen LED display screen provided by the invention. The B-shaped support frame can be adjusted in any time according to specific requirements of the sites and is convenient to use, and can be applied for large LED screens of courts, LED floor tile screens and the like. The devices of the invention are convenient for assembly, disassembly and transportation.

### BRIEF DESCRIPTION OF THE DRAWINGS

Fig. 1 is a structural schematic diagram illustrating B-shaped support frames which form part of the back frame for a LED display screen of the invention.
Fig. 2 is a structural schematic diagram of the B-shaped support frame shown in Fig. 1;
Fig. 3 is a side view of Fig. 1;
Fig. 4 is a structural schematic diagram of an LED display screen for courts as a similar example not forming part of the invention;
Fig. 5 is a structural schematic diagram of a large-screen LED floor tile screen, which is another similar example not forming part of the invention;
Fig. 6 is a schematic exploded view of a support structure for the LED floor tile screen in Fig. 5;
Fig. 7 is a side view of Fig. 5;
Fig. 8 is a structural schematic diagram of a large-screen LED display screen according to the invention;
Fig. 9 is a structural schematic diagram of a back frame for the LED display screen shown in Fig. 8;
Fig. 10 is a structural schematic diagram of the first connecting member shown in Fig. 9;
Fig. 11 is a structural schematic diagram of the B-shaped support frame shown in Fig. 9;
Fig. 12 is a structural schematic diagram of the fastening component shown in Fig. 9;
Fig. 13 is a structural schematic diagram of the support underframe shown in Fig. 9;
Fig. 14 is a structural schematic diagram of the balance bracket shown in Fig. 9;
Fig. 15 is a structural schematic diagram of the bottom beam shown in Fig. 9;
Fig. 16 is another structural schematic diagram of the support structure shown in Fig. 9;
Fig. 17 is a structural schematic diagram of the second connecting member shown in Fig. 9;
Fig. 18 is another structural schematic diagram of the support structure shown in Fig. 9;
Fig. 19 is a schematic diagram of Fig. 18 in another state;
   wherein: 11. LED screen body; 12. B-shaped support frame; 121. first support bar; 1211. plugging hole; 122. second support bar; 1220. top plate; 1221. bottom plate; 1222. side plate; 1224. through-hole; 123. mounting part; 13. first connecting member; 130. plugging section; 14. second connecting member; 140. slot; 15. fastening component; 16. support base;
   21. LED screen body; 22. support device; 23. base; 230. first bearing bar; 231. second bearing bar; 2310. second fixing hole; 24. mounting frame; 240. B-shaped support frame; 2400. first support bar; 2401. second support bar; 2403. first fixing hole; 241. covering plate; 242. mounting part; 25. support bar; 250. first support bar section; 2500. first sliding fit component; 251. second support bar section; 2510. second sliding fit component; 26. connecting member; 260. slidable mounting member; 2600. first base plate; 2601. limiting plate; 261. hinge member; 2610. hinge plate; 2611. second base plate; 262. second pin shaft; 27. first fastening component; 28. second fastening component;
   31. LED floor tile screen; 32. support structure for LED floor tile screens; 33. first connecting member; 30. limiting step section; 34. second connecting member; 340. slot; 35. B-shaped support frame; 350. first support bar; 351. second support bar; 3510. top plate; 3511. bottom plate; 3512. side plate; 3513. mounting hole; 3514. through-hole; 352. mounting part; 36. fastening component; 37. support base;
   41. LED screen body; 42. back frame for LED display screen; 420. support structure; 421. vertical support frame; 4210. support frame unit; 4211. first connecting member; 4212. first limiting step section; 422. transverse connecting frame; 423. base; 4230. support underframe; 4231. first bearing bar; 4232. second bearing bar; 4233. third bearing bar; 4234. second mounting hole; 4235. balance bracket; 4236. main body; 4237. reinforcing bar; 4238. wheels; 424. bottom beam; 4240. mounting section; 425. first support bar; 4250. first mounting hole; 426. second support bar; 427. weight box; 43. fastening component; 44. second connecting member; 440. second limiting step section.

### DETAILED DESCRIPTION OF ILLUSTRATED EMBODIMENTS

The invention will be further illustrated in the detailed description in conjunction with the drawings and the embodiments. The following embodiments are intended to illustrate the invention, but not to restrict the scope of the invention.

### Example

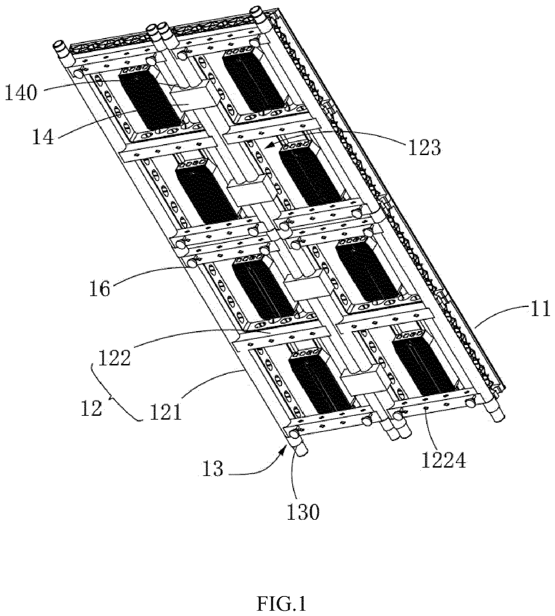

As illustrated in Fig. 1 to Fig. 3, this example provides a B-shaped support frame 12. When in use, a plurality of B-shaped support frames 12 can be arranged in rows and columns in a first direction (longitudinal direction) and a second direction (transverse direction) perpendicular to the first direction. By a plurality of first connecting members 13 and a plurality of second connecting members 14, the plurality of B-shaped support frames are connected with each other to form a support structure for an LED floor tile screen. By mounting two LED screen bodies 11 on the front end face of each B-shaped support frame 12 of the support structure for the LED floor tile screen, a large-screen LED floor tile screen can be formed.

Specifically, in this example, each B-shaped support frame 12 comprises two first support bars 121 and three second support bars 122. The two first support bars 121 and two second support bars 122 are alternately and vertically connected in an end-to-end manner, and the other second support bar 122 is vertically connected with the middles of the two first support bars 121 and divides the B-shaped support frame 12 into two frame-like mounting parts 123. One LED screen body 11 can be removably mounted on the front end face of each mounting part 123. When the B-shaped support frames 12 of the invention are connected with each other to form the support structure for LED floor tile screens, the plurality of B-shaped support frames 12 are arranged in rows and columns in the length direction of the first support bar 121 and in the length direction of the second support bar 122. Understandably, in this embodiment, the first direction is the length direction of the first support bar 121, and the second direction is the length direction of the second support bar 122. In the length direction of the first support bar 121, two adjacent B-shaped support frames 12 are detachably connected by two first connecting members 13. In the length direction of the second support bar 122, two adjacent B-shaped support frames 12 are removably connected by two second connecting members 14.

It is to be noted that, in this example, the first support bar 121 and the second support bar 122 are fixedly connected by welding, to reinforce the structural strength of the B-shaped support frame 12.

Both ends of the first support bar 121 of each B-shaped support frame 12 are respectively provided with a plugging hole 1211, and each first connecting member 13 is a connecting shaft bar arranged with a plugging section 130 at each end. In the length direction of the first support bar 121, the two plugging sections 130 of each first connecting member 13 are plugged into the corresponding two plugging holes 1211 of the two adjacent B-shaped support frames 12, to detachably connect the two adjacent B-shaped support frames 12 in the length direction of the first support bar 121. Preferably, the plugging holes 1211 of the first support bars 121 are limiting step holes, and correspondingly, the plugging sections 130 at both ends of each first connecting member 13 are limiting step sections; and the plugging section 130 tapers in the direction away from the first connecting member 13, to fixedly connect the first connecting member 13 with the plugging hole 1211, and to prevent the disengagement between the two B-shaped support frames 12 adjacent in the length direction of the first support bar 121.

In this example, each second support bar 122 is arranged along its length direction with a plurality of through-holes 1224, through which the fastening component 15 such as a bolt and the like can pass and lock into the LED screen body 11, to removably mount the LED screen body 11 on the B-shaped support frame 12. Specifically, in this embodiment, on the two second support bars 122 at both ends of each B-shaped support frame 12, the plurality of through-holes 1224 are arranged in one row along the length direction of the second support bar 122. On the second support bar 122 which is in the middle of each B-shaped support frame 12, the plurality of through-holes 1224 are alternately arranged in two rows along the length direction of the second support bar 122. With such arrangement, two LED screen bodies 11 can be conveniently mounted on one B-shaped support frame 12.

In this example, each second connecting member 14 is block-shaped, and is arranged with two separate slots 140 along the length direction of the second support bar 122. Each slot 140 extends along the length direction of the first support bar 121 and extends through two opposite sides of the second connecting member 14. In the length direction of the second support bar 122, the two adjacent B-shaped support frames 12 have the two corresponding second connecting members 14 alternately mounted on the rear end faces of the two B-shaped support frames 12 along the length direction of the first support bar 121. In addition, the two adjacent first support bars 121 of the two B-shaped support frames 12 can be clamped into the two slots 140 of each second connecting member 14, so that the two B-shaped support frames 12 adjacent in the length direction of the second support bar 122 can be detachably connected with each other, without interfering the mounting of the LED screen body 11 on the front end face of the B-shaped support frame 12. Preferably, the cross-section of the slot 140 is C-shaped, and the first support bar 121 is circular tube-shaped. When the first support bar 121 is clamped into the slot 140, the first support bar 121 can be prevented from disengaging from the slot 140, and thus avoiding the disengagement of the two B-shaped support frames 12 adjacent in the length direction of the second support bar 122.

The two second connecting members 14 for the two B-shaped support frames 12 adjacent in the length direction of the second support bar 122 are symmetrical with respect to the length direction of the second support bar 122 in the middle of the two B-shaped support frame 12, to uniform the bearing stress of the B-shaped support frame 12 when it is stepped on, and thus to improve the life of the large-screen LED floor tile screen.

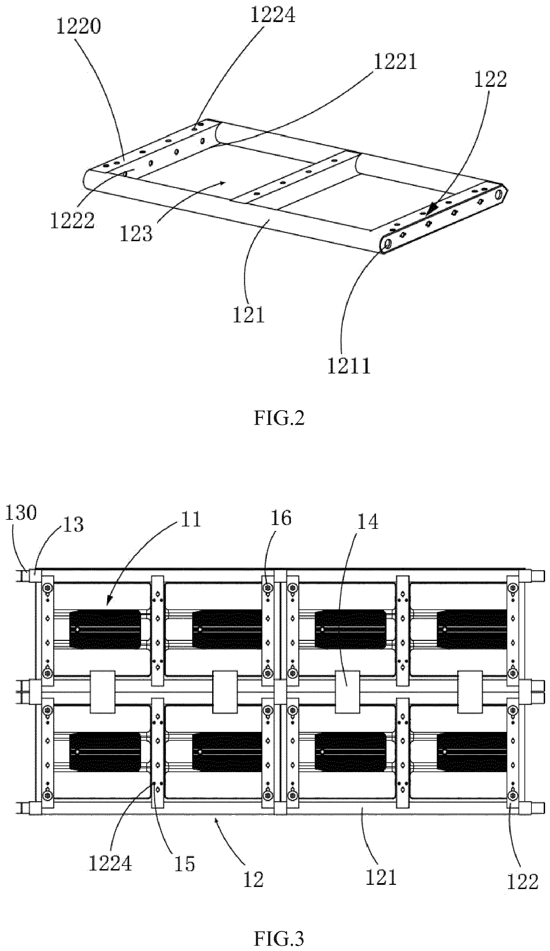

As further illustrated in Fig. 2, each second support bar 122 is rectangular tube-shaped, and comprises a top plate 1220, a bottom plate 1221 which is opposite to the top plate 1220, and two opposite side plates which are vertically connected with the bottom plate 1221 and the top plate 1220. Each through-hole 1224 passes through the top plate 1220 and the bottom plate 1221 of the second support bar 122.

In this example, each of the four top corners of the rear end mounting face of each B-shaped support frame 12 is screwed with a support base 16. When the large-screen LED floor tile screen is arranged on uneven ground or stage, the partial height of the large-screen LED floor tile screen can be adjusted by screwing the support base 16, to make an even surface of the large-screen LED floor tile screen. Furthermore, in this embodiment, the support base 16 is made of rubber material and work as absorbing shock and energy, so as to protect the large-screen LED floor tile screen when subjected to high pressure, and improves the life of the large-screen LED floor tile screen.

The advantages of this example are as follows:
1. In application of the B-shaped support frame of the invention, a plurality of the B-shaped support frames can be connected in the length direction of the first support bar by a plurality of the first connecting members, and a plurality of the B-shaped support frames can be connected in the length direction of the second support bar by a plurality of the second connecting members, to form a support structure for the LED floor tile screen. The formed support structure for the LED floor tile screen is available for a quick assembly/disassembly and transportation, and has strong flexibility.
2. When the B-shaped support frame is in application, the users can increase or decrease the area of the support structure for LED floor tile screen according to the area of the application site by increasing or decreasing the number of the B-shaped support frames, and match the support structure for LED floor tile screen with the application site, thus making the area of the large-screen LED floor tile screen free from predetermination and available for temporary adjustments according to specific requirements of the sites, and facilitating convenient use.
3. Each of the four top corners of the rear end mounting face of each B-shaped support frame is screwed with a support base. When the large-screen LED floor tile screen is arranged on uneven ground or stage, the partial height of the LED floor tile screen can be adjusted by screwing the support base 16, to make an even surface of the large-screen LED floor tile screen.

### Example not making part of the invention

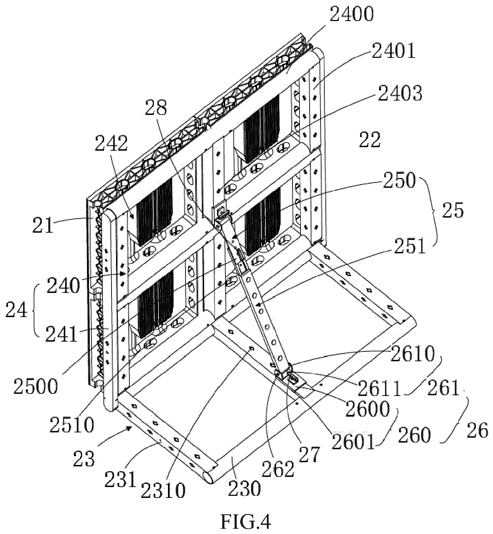

As illustrated in Fig. 4, this example provides an LED display screen for courts, which comprises a support device 22 and a plurality of screen bodies 21.

The support device 22 comprises a mounting frame 24, a base 23, a support bar 25, and two connecting members 26. The mounting frame 24 comprises two B-shaped support frames 240 and two covering plates 241. Each B-shaped support frame 240 comprises two first support bars 2400 (also called first fixing bar) and three second support bars 2401 (also called second fixing bar); the two first support bars 2400 and two second support bars 2401 are alternately and vertically connected in an end-to-end manner, and the other second support bar 2401 is vertically connected with the middles of the two first support bars 2400 and divides each B-shaped support frame 240 into two mounting parts 242. The front end face of each mounting part 242 can be removably mounted with one LED screen body 21. Two B-shaped support frames 240 are arranged side-by-side along the length direction of the second support bar 2401. The two adjacent first support bars 2400 of the two B-shaped support frames 240 abut on each other. The two covering plates 241 cover on the two second support bars 2401 at two outside ends of the two side-by-side B-shape support frames 240.

The base 23 is B-shaped and comprises two first bearing bars 230 and three second bearing bars 231. The two first bearing bars 230 and two second bearing bars 231 are alternately and vertically connected in an end-to-end manner, and the other second bearing bar 231 is vertically connected with the middles of the two first bearing bars 230.

The lower end of each covering plate 241 extends to the outer side of the corresponding B-shaped support frame 240 and is hinged with both ends of the first bearing bar 230 of the base 23 by a first pin shaft.

The two connecting members 26 are respectively removably arranged on the second support bar 2401 and the second bearing bar 231 corresponding to the second support bar 2401, and the positions of the two connecting members 26 are respectively adjustable in the length direction of the second support bar 2401 and the length direction of the second bearing bar 231. In this embodiment, the two connecting members 26 are arranged respectively on the middle second support bar 2401 and the middle second bearing bar 231. Optionally, in other embodiments, the two connecting members 26 can be arranged respectively on the left side second support bar 2401 and the left-side second bearing bar 231, or arranged respectively on the right side second support bar 2401 and the right side second bearing bar 231.

Both ends of the support bar 25 are respectively hinged with the two connecting members 26. When the mounting frame 24 is supported by the support bar 25, an inclination angle is formed between the mounting frame 24 and the ground, and the mounting frame 24 is suspended.

In this example, each connecting member 26 comprises a slidable mounting member 260 and a hinge member 261 which is arranged on the slidable mounting member 260. The slidable mounting member 260 is position-adjustably arranged on the corresponding second support bar 2401, or on the corresponding second bearing bar 231. The hinge member 261 is hinged with the corresponding end of the support bar 25.

Specifically, the slidable mounting member 260 comprises a first base plate 2600 and two limiting plates 2601 which extends vertically downwards from the two opposite sides of the first base plate 2600, and an accommodating slot is formed between the first base plate 2600 and the two limiting plates 2601, The accommodating slot partially accommodates the corresponding second support bar 2401 or the corresponding second bearing bar 231, to enable the slidable mounting member 260 to slide along the corresponding second support bar 2401, or along the corresponding second bearing bar 231. More specifically, the first base plate 2600 is provided with a through-hole; the second support bar 2401 is arranged with a plurality of the first fixing holes 2403 along the length direction, and the second bearing bar 231 is arranged with a plurality of second fixing holes 2310 along the length direction. A first fastening component 27 extends through the through-hole of the first base plate 2600 and locks into the first fixing holes 2403 of the corresponding second support bar 2401, or into the second fixing hole 2310 of the corresponding second bearing bar 231, to ensure that the slidable mounting member 260 can be position-adjustably arranged on the corresponding second support bar 2401, or on the corresponding second bearing bar 231.

The hinge member 261 comprises two hinge plates 2610 which are arranged oppositely at the top of the first base plate 2600. By a second pin shaft 262, each end of the support bar 25 is hinged with the two hinge plates 2610 of the hinge member 261. In this embodiment, in order to reinforce the structural strength of the hinge member 261, the hinge member 261 further comprises a second base plate 2611 which is arranged on the first base plate 2600. The two hinge plates 2610 extend vertically upwards from the two opposite ends of the second base plate 2611. Specifically, the second base plate 2611 is removably mounted on the first base plate 2600 by a fastening component such as a screw, or is welded on the first base plate 2600 by welding.

In this example, the support bar 25 comprises a first support bar section 250 and a second support bar section 251. For the first support bar section 25 and the second support bar section 251, the two ends which are not hinged with the connecting members 26, are respectively arranged with a first sliding fit component 2500 and a second sliding fit component 2510, and the first sliding fit component 2500 is in sliding connection with the second sliding fit component 2510, and is connected with the second sliding fit component 2510 by a second fastening component 28, such as a screw. The support bar 25 is arranged in a two-section structure in sliding fit, that is, the length of the support bar 25 is adjustable, to facilitate convenient adjustment of the inclination angle of the mounting frame 24.

In this example, in order to provide a firm connection between the two B-shaped support frames 240, the covering plate 241 and the two B-shaped support frames 240 are fixed together by a third fastening component, such as a screw.

In this example, in order to provide a firm connection between the two B-shaped support frames, the two abutting first support bars 2400 of the two B-shaped support frames 240 are fixed by a fourth fastening component, such as a screw.

In this example, the LED screen body 21 is removably mounted on the B-shaped support frame 240 by a fifth fastening component, such as a screw.

The advantages of the example are as follows.

In the example, since the support device 22 is detachably connected with the base 23 by the mounting frame 24, the support bar 25 is detachably connected with the mounting frame 24 and is hinged with the base 23, and the two B-shaped support frames 240 of the mounting frame 24 are detachably connected, the support device 22 can be easily dissembled for transportation, and is simple in structure. Furthermore, when the support device 22 is applied to the LED display screen for courts of the invention, the LED screen body 21 of the LED display screen for courts and the B-shaped support frames 240 of the support device 22 can be detachably connected, such that the LED display screen for courts can be easily dissembled for transportation, and is simple in structure.

### Another example not forming part of the invention

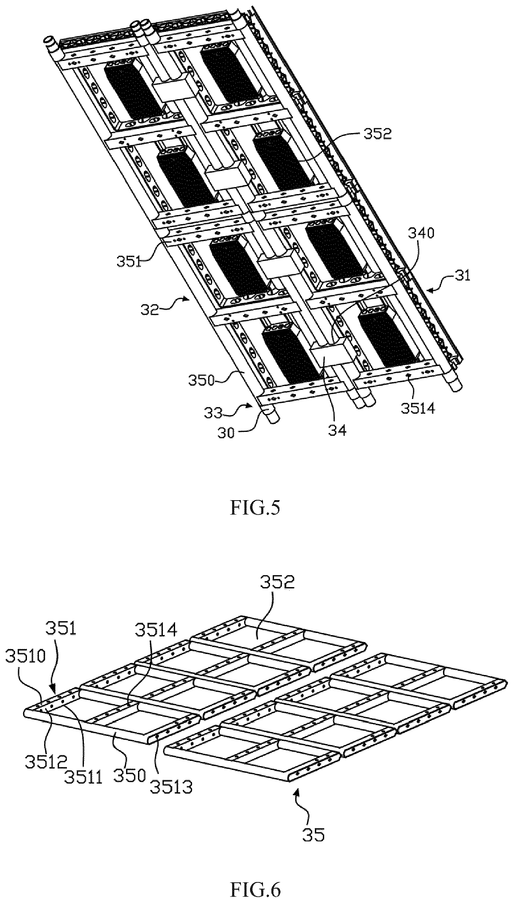

As illustrated in Figs. 5-7, this example provides a large-screen LED floor tile screen, which comprises a support structure 32 for LED floor tile screen and a plurality of LED floor tile screens 31(the LED floor tile screen is a kind of LED screen body).

The support structure 32 for LED floor tile screen comprises a plurality of B-shaped support frames 35, a plurality of first connecting members 33 and a plurality of second connecting members 34. Herein, the plurality of B-shaped support frames 35 are arranged in rows and columns in a first direction and a second direction. In the first direction, two adjacent B-shaped support frames 35 are detachably connected by two first connecting members 33. In the second direction, two adjacent B-shaped support frames 35 are detachably connected by two second connecting members 34. Each B-shaped support frame 35 is removably mounted with two separate LED floor tile screens 31 along the first direction. It is to be noted that, in this embodiment, the first direction is direction X, the second direction is direction Y.

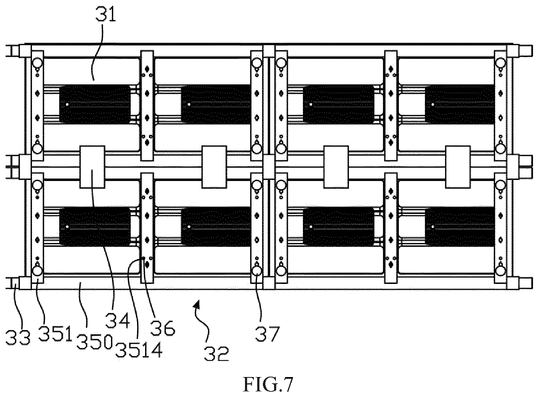

As illustrated in Fig. 7, each B-shaped support frame 35 comprises two first support bars 350 and three second support bars 351, wherein the two first support bars 350 and two second support bars 351 are alternately and vertically connected in an end-to-end manner, and the other second support bar 351 is vertically connected with the middles of the two first support bars 350 and divides the front mounting face of the B-shaped support frame 35 into two mounting parts 352. In addition, the length direction of the first support bar 350 is the first direction, and the length direction of the second support bar 351 is the second direction. The front mounting face of each mounting part 352 is removably mounted with one LED floor tile screen 31. It is to be noted that, in this embodiment, the first support bar 350 and the second support bar 351 are fixedly connected by welding, to reinforce the structural strength of the B-shaped support frame 35.

As further illustrated in Fig. 6, each second support bar 351 is rectangular tube-shaped, and comprises a top plate 3510, a bottom plate 3511 which is opposite to the top plate 3510, and two opposite side plates 3512 which are vertically connected with the bottom plate 3511 and the top plate 3510, Mounting holes 3513 are provided on each side plate 3512 of the top second support bar 351 and the bottom second support bar 351 of each B-shaped support frame 35 at intervals along the second direction. Each first connecting member 33 is a connecting shaft bar, and the first connecting member 33 is plugged into the corresponding mounting hole 3513 of the two B-shaped support frames adjacent in the first direction, to detachably connect the two B-shaped support frames adjacent in the first direction.

In this example, both ends of each first connecting member 33 are respectively arranged with a limiting step section 30, and the limiting step section 30 tapers in the direction away from the first connecting member 33. Correspondingly, each mounting hole 3513 is a limiting step hole, so that the first connecting member 33 can be fixedly connected with the mounting hole 3513, to avoid the disengagement of the two B-shaped support frames 35 adjacent in the first direction.

In this example, the three second support bars 351 of each B-shaped support frame 35 are respectively provided with a plurality of through-holes 3514 which are arranged in the second direction and pass through the top plate 3510 and the bottom plate 3511, so that a fastening component such as a connecting bolt can pass through the through-hole 3514 of the second support bar 351 and lock into the LED floor tile screen 31 , to facilitate a detachable mounting of the LED floor tile screen 31 on the B-shaped support frame 35. Specifically, in this embodiment, on the top second support bar 351 and the bottom second support bar 351 of each B-shaped support frame 35, the plurality of through-holes 3514 are successively arranged in one row along the second direction. On the second support bar 351 which is in a middle of each B-shaped support frame 35, the plurality of through-holes 3514 are successively arranged along the second direction in two rows at intervals. Due to such arrangement, two LED screen bodies 31 can be conveniently mounted on one B-shaped support frame 35.

In this example, each second connecting member 34 is block-shaped, and each second connecting member 34 is arranged with two separate slots 340 along the second direction. Herein, each slot 340 extends in the first direction and passes through the two opposite sides of the second connecting member 34. Two second connecting members 34 which are corresponding to the two B-shaped support frames 35 adjacent in the second direction, are mounted on the rear mounting faces of the two B-shaped support frames 35 at an interval in the first direction, two adjacent first supporting bars 350 of the two B-shaped support frames 35 are clamped with the two slots 340 of each second connecting member 34, to detachably connect the two B-shaped support frames 35 adjacent in the second direction, without interfering the mounting of LED floor tile screen 31 on the front end face of the B-shaped support frame 35. Preferably, the slot 340 is C-shaped in cross-section, and the first support bar 350 is rectangular tube-shaped. When the first support bar 350 is clamped into the slot 340, the first support bar 350 can be prevented from disconnecting from the slot 340, so that the disengagement of the two B-shaped support frames 35 adjacent in the second direction is avoided.

On the two B-shaped support frames 35 adjacent in the second direction, the two second connecting members 34 are symmetrically arranged by taking the extension line of the second support bars 351 in the middles of the two B-shaped support frames 35 as the symmetric axis, to uniform the bearing stress of the B-shaped support frame 35 when it is stepped on, and thus to improve the life of the large-screen LED floor tile screen.

In this example, each of the four top corners of the rear end mounting face of each B-shaped support frame 35 is screwed with a support base 37. When the large-screen LED floor tile screen is arranged on uneven ground or stage, the partial height of the large-screen LED floor tile screen can be adjusted by screwing the support base 37, to make an even surface of the large-screen LED floor tile screen. Furthermore, in this embodiment, the support base 37 is made of rubber material, to work as absorbing shock and energy, and to protect the large-screen LED floor tile screen when subjected to high pressure, thus improving the life of the large-screen LED floor tile screen.

The advantages of this example are as follows:
1. In the large-screen LED floor tile screen, the support structure for LED floor tile screen is formed by a plurality of B-shaped support frames 35 which are detachably connected together in the first direction by a plurality of the first connecting members 33 and in the second direction by a plurality of the second connecting members 34. With such arrangement, the support structure for LED floor tile screen is simple in structure, available for a quick assembly/disassembly and transportation, and strong in flexibility.
2. In the large-screen LED floor tile screen, the support structure for LED floor tile screen is formed by a plurality of B-shaped support frames 35 which are detachably connected in the first direction by a plurality of the first connecting members 33 and in the second direction by a plurality of the second connecting members 34. The users increase or decrease the area of the support structure for LED floor tile screen by increasing or decreasing the number of the B-shaped support frames 35 according to the area of the application site, as to make the support structure for LED floor tile screen has an area matching with the application site, thus making the area of the large-screen LED floor tile screen free from predetermination and available for temporary adjustments according to specific requirements of the sites, and convenient to use.
3. Each of the four top corners of the rear end mounting face of each B-shaped support frame 35 is screwed with a support base 37; when the large-screen LED floor tile screen is arranged on uneven ground or stage, the partial height of the large-screen LED floor tile screen can be adjusted by screwing the support base 37, to make an even surface of the large-screen LED floor tile screen.

### The invention

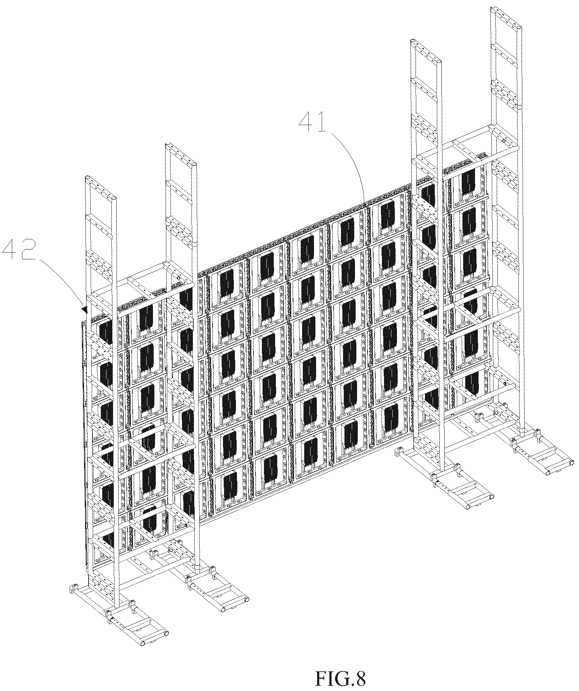

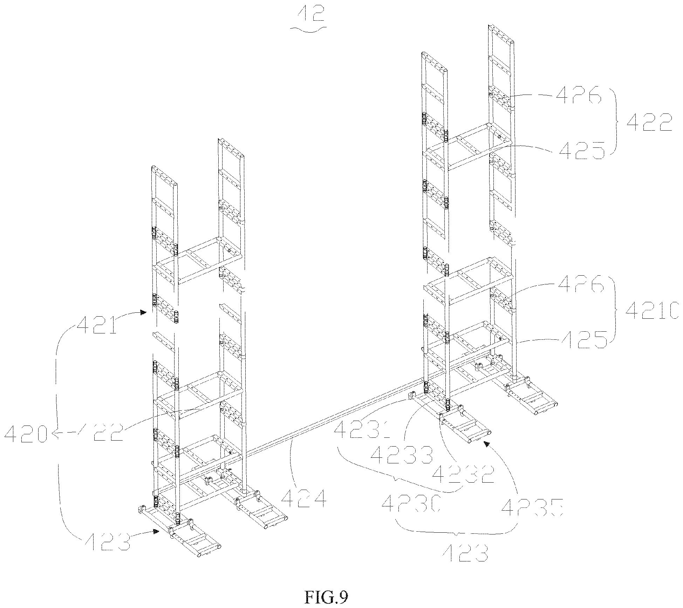

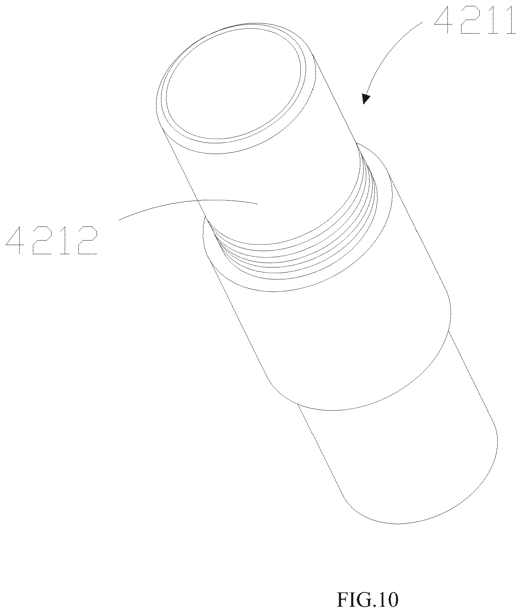

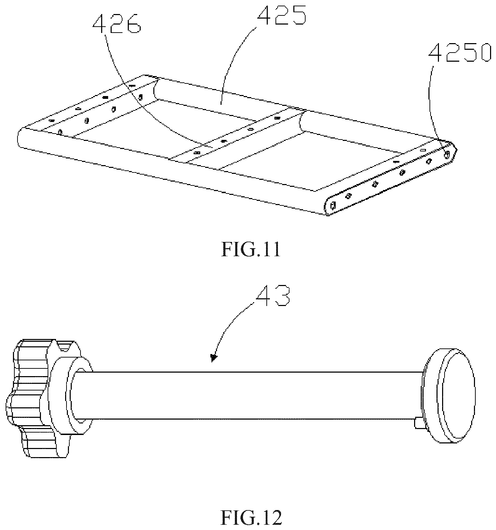

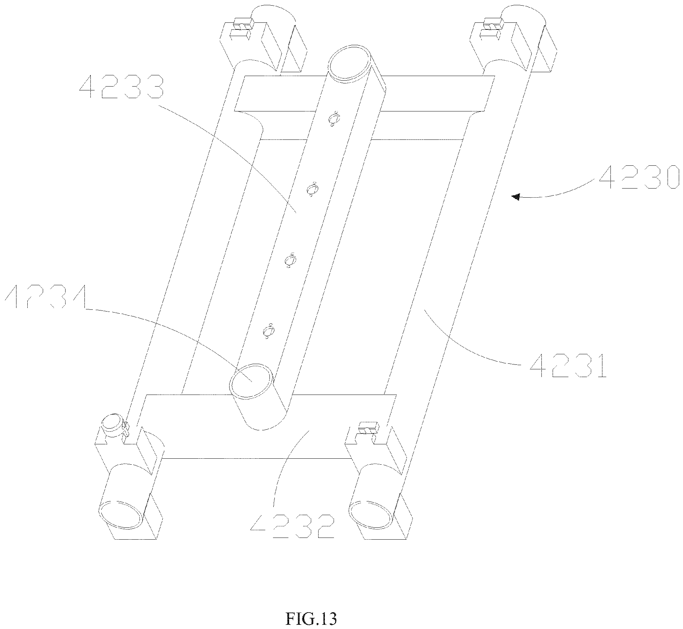

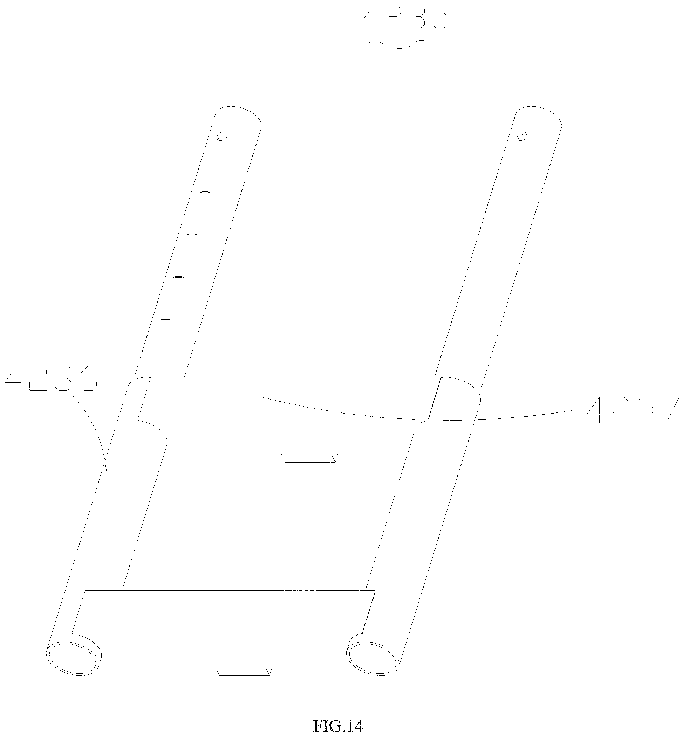

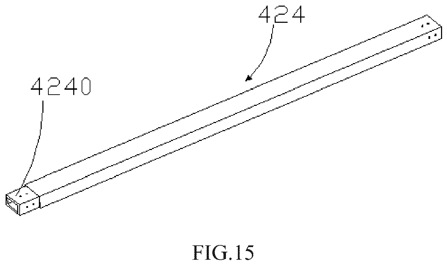

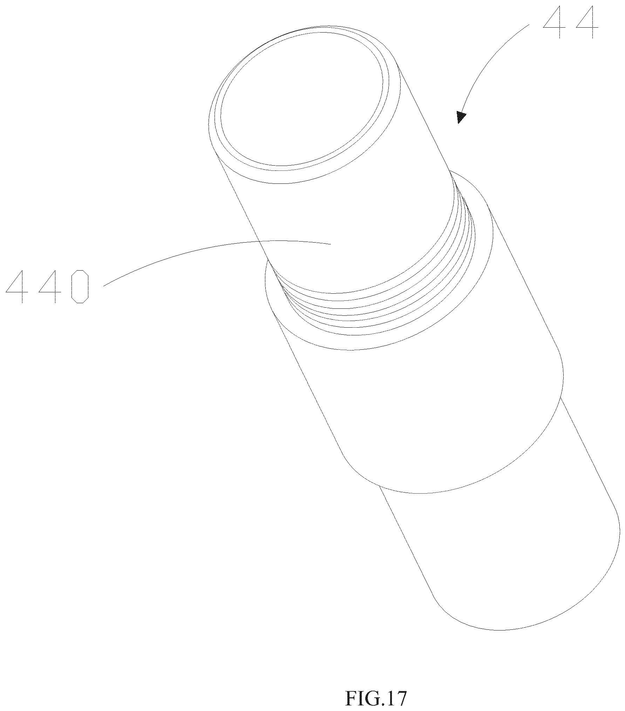

As illustrated in Fig. 8 to Fig. 17, the invention provides a large-screen LED display screen, which comprises a back frame 42 for LED display screen and a plurality of LED screen bodies 41.

The back frame 42 for LED display screen comprises two support structures 420 and a bottom beam 424. Herein, the support structure 420 comprises two vertical support frames 421, a plurality of transverse connecting frames 422 and a base 423. The two vertical support frames 421 are vertically and oppositely arranged on the base 423 and are removably connected with the base 423. The vertical support frame 421 comprises a plurality of support frame units 4210 which are successively arranged along the vertical direction, and a plurality of first connecting members 4211. In the vertical direction, the two adjacent support frame units 4210 are detachably connected by two first connecting members 4211. The plurality of transverse connecting frames 422 are horizontally and successively arranged from top to bottom between the two vertical support frames 421 and are detachably connected with the two vertical support frames 421. The two support structures 420 are oppositely and separately arranged, and the two ends of the bottom beam 424 are removably connected with the two support structures 420.

The plurality of LED screen bodies 41 are arranged in rows and columns along the vertical direction and along the transverse direction, two adjacent LED screen bodies 41 can be detachably connected, for example by a locking member. The bottom beam 424 supports a plurality of bottommost LED screen bodies 41 and is removably connected with the plurality of bottommost LED screen bodies 41.

In this embodiment, the plurality of support frame units 4210 and the plurality of transverse connecting frames 422 are all B-shaped support frames, each of which comprise two first supporting bars 425 and three second support bars 426, wherein the two first support bars 425 and two second support bars 426 are vertically and alternately connected in an end-to-end manner, and the other second support bar 426 is vertically connected with the middles of the two first support bars 425. Specifically, in this embodiment, the two first support bars 425 and the three second support bars 426 are fixedly connected by welding. One of the first support bars 425 of the bottommost transverse connecting frame 422 is exposed to the outer side of the front end face of the vertical support frame 421, and both ends of the bottom beam 424 are removably connected with this first support bar 425. In addition, the bottom beam 424 and this first support bar 425 support the plurality of bottommost LED screen bodies 41 together and are detachably connected with the plurality of bottommost LED screen bodies 41, to facilitate the fixing of more LED screen bodies 41 and increase the display area for the large-screen LED display screen of the invention.

The two opposite ends of each first support bar 425 are each arranged with a first mounting hole 4250, and each first connecting member 4211 is a connecting shaft. In the longitudinal direction, the first connecting member 4211 is plugged into the corresponding first mounting holes 4250 of the two adjacent first support bars 425 of the two adjacent support frame units 4210, to detachably connect the two adjacent support frame units 4210.

In this embodiment, the two ends of the first connecting member 4211 are respectively arranged with a first limiting step section 4212, and the first limiting step section 4212 tapers in the direction away from the first connecting member 4211. Correspondingly, each first mounting hole 4250 is a limiting step hole. In this way, the first connecting member 4211 can be fixedly connected to the first mounting hole 4250, to avoid the disengagement of the two adjacent support frame units 4210 in the vertical direction.

In this embodiment, the two ends of the bottom beam 424 are correspondingly arranged with a mounting section 4240 which is mounted in the first mounting hole 4250 of the corresponding first support bar 425, to so that the bottom beam 424 can be removably connected with the two support structures 420.

In this embodiment, the second support bars 426 at both ends of the transverse connecting frame 422, and two opposite second support bars 426 of the two opposite support frame units 4210, are fixedly connected by a fastening component 43, such as a screw.

In this embodiment, the base 423 comprises two oppositely disposed support underframes 4230, and the support underframe 4230 comprises two first bearing bars 4231, second bearing bars 4232 and a third bearing bar 4233, wherein the two first bearing bars 4231 and the two second bearing bars 4232 are vertically and alternately connected in an end-to-end manner, and the third bearing bar 4233 is arranged on the two second bearing bars 4232 and is vertically connected with the middles of the two second bearing bars 4232. The top faces of the two ends of the third bearing bar 4233 are respectively provided with a second mounting hole 4234, the two vertical support frames 421 of each support structure 420 respectively correspond to the two support underframes 4230 of the corresponding base 423 one to one, and two bottommost first support bars 425 of each vertical support frame 421 are detachably connected by two second connecting members 44.

In this embodiment, the top faces of the two ends of the third bearing bar 4233 are respectively arranged with the second mounting hole 4234, the second connecting members 44 plug into the corresponding first mounting hole 4250 and the corresponding second mounting hole 4234, to removably connect the vertical support frame 421 with the base 423.

In this embodiment, the second connecting member 44 is a connecting shaft, the two ends of the second connecting member 44 are respectively arranged with a second limiting step section 440 tapering in the direction away from the second connecting member 44. Correspondingly, all first mounting holes 4250 are limiting step holes. Correspondingly, the first mounting hole 4250 and the second mounting hole 4234 are all limiting step holes, and the shapes of the first mounting hole 4250 and the second mounting hole 4234 match with the shape of the second limiting step section 440, to facilitate a firm connection between the second connecting member 44 and the corresponding first mounting hole 4250 and second mounting hole 4234, and to avoid the disengagement of the vertical support frame 421 and the base 423.

In this embodiment, each base 423 further comprises two balance brackets 4235, the two balance brackets are removably connected with the front end and the rear end of the corresponding support underframe 4230, thus to facilitate a stable gravity center of the whole structure. Specifically, the balance bracket 4235 comprises a U-shaped main body 4236 and a reinforcing bar 4237 which is vertically connected with the main body 4236 and is in a middle of the main body 4236.

In this embodiment, the support underframe 4230 is further arranged with a support block at its bottom.

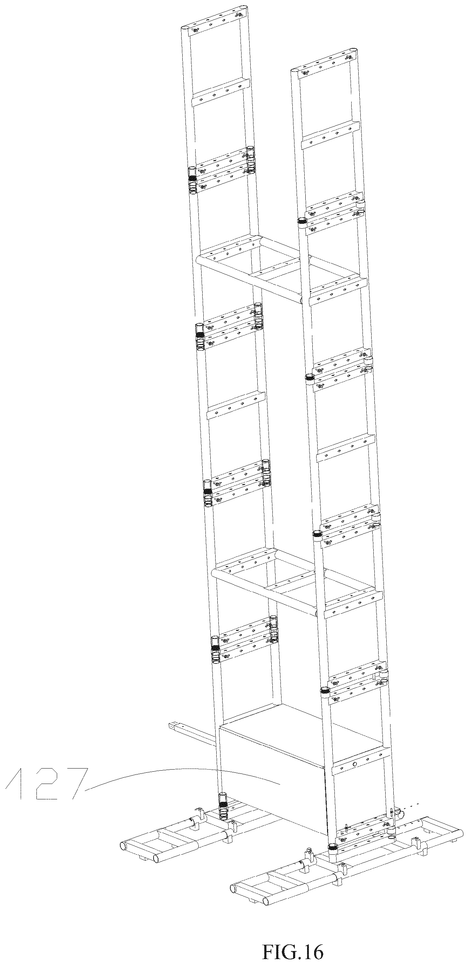

As illustrated in Fig. 16, in another structure of the back frame 42 for LED display screen, the back frame 42 for LED display screen further comprises two weight boxes 427, each weight box 427 corresponds to one support structure 420, and each weight box 427 is disposed between the two vertical support frames 421 of the corresponding support structure 420, and is arranged near the base 423, and is removably connected with the two vertical support frames 421 by screws or the like.

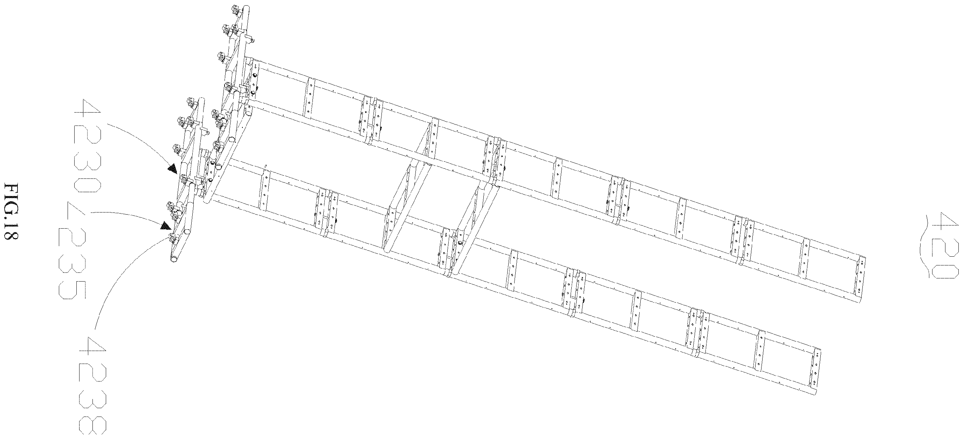

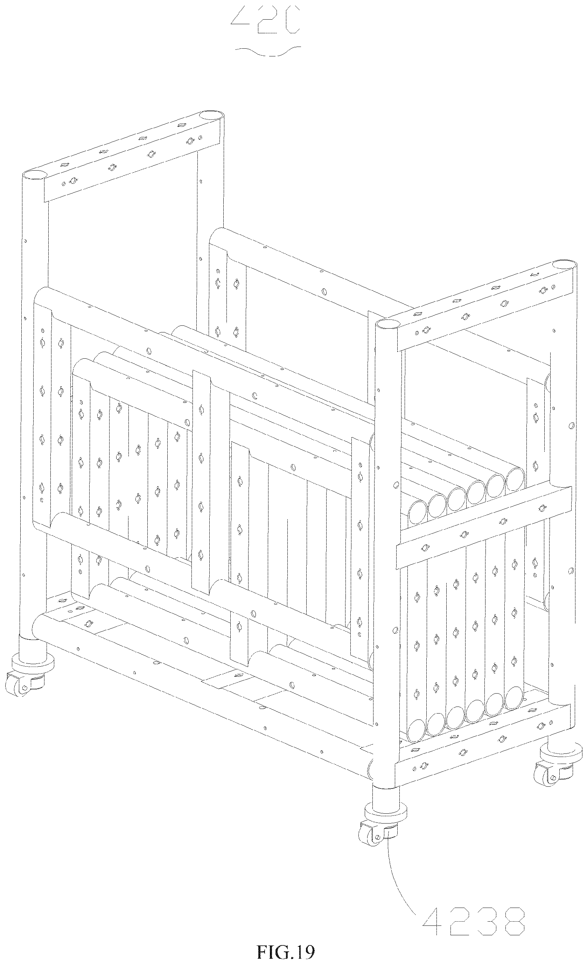

As illustrated in Fig. 18 and Fig. 19, in another structure of the back frame 42 for LED display screen, the plurality of support frame units 4210 of the support structure 420 can be partially detached and arranged on the base 423 to form a luggage-shaped structure. The support underframe 4230 and the balance bracket 4235 are arranged with wheels 4238 at their bottoms, to facilitate the moving of the support structure 420.

The advantages of the inventions are as follows.
1. In the large-screen LED display screen of the invention, since all components of the back frame 42 for LED display screen are designed with detachable connection structures, the back frame 42 for LED display screen is available for a quick assembly/disassembly and transportation and is strong in flexibility, so that the large-screen LED display screen is available for a quick assembly/disassembly and transportation and is strong in flexibility.
2. When the large-screen LED display screen of the invention is in application, the users can increase or decrease the area of the back frame 42 for LED display screen by increasing or decreasing the number of the support frame units 4210 and the length of the bottom beam 24 according to the area of the application site, as to match the area of the back frame 42 for LED display screen with the application site, thus making the large-screen LED display screen free from predetermination and available for temporary adjustments according to specific requirements of the sites, and convenient to use.

The embodiments disclosed above are only preferred embodiments of the invention. It should be noted that for those skilled in the art, many improvements and alternatives can be made without departing from the principle of the invention, these improvements and alternatives should also be included in the scope of the invention.

## Claims

1. A back frame (42) for an LED display screen, whereby it comprises two support structures (420) and a bottom beam (424), wherein the two support structures (420) are oppositely arranged at an interval, and two ends of the bottom beam (424) are detachably connected with the two support structures (420), respectively; **characterized in that** each support structure (420) comprises two vertical support frames (421), a plurality of transverse connecting frames (422), a base (423), and a plurality of first connecting members (4211), the two vertical support frames (421) are vertically and oppositely arranged on the base (423), the vertical support frame (421) comprises a plurality of support frame units (4210) successively arranged in vertical direction and a plurality of first connecting members (4211); in vertical direction, two adjacent support frame units (4210) are connected by two first connecting members (4211), and the plurality of transverse connecting frames (422) are horizontally arranged between the two vertical support frames (421), successively from top to bottom;
wherein the two support structures (420) are oppositely arranged in a manner that the four support frames (421) of the two support structures (420) lie in four parallel planes; wherein the support frame units (4210) and the transverse connecting frames (422) are B-shaped support frames (12), the B-shaped support frame (12) comprises two first support bars (121; 425) and three second support bars (122; 426), wherein the two first support bars (121; 425) and two of the second support bars (122; 426) are alternately and vertically connected in an end-to-end manner, and the other second support bar (122; 426) is vertically connected with the middles of the two first support bars (121; 425);
wherein the two support structures (420) each have a bottommost transverse connecting frame (422), wherein one of the first support bars (425) of each bottommost transverse connecting frame (422) is exposed to an outer side of a front end face of the corresponding vertical support frame (421), wherein both ends of the bottom beam (424) are removably connected with one of the first support bars (425).

2. The back frame (42) for an LED display screen according to claim 1, **characterized in that**: the base (423) comprises two support underframes (4230) which are oppositely arranged, and respectively, each support underframe (4230) is vertically and removably connected with the lowest support frame unit (4210) of one of the vertical support frames (421) by two second connecting members (44).

3. The back frame (42) for an LED display screen according to claim 1, **characterized in that**: the back frame (42) for the LED display screen further comprises two weight boxes (427), each of which is arranged on one support structure (420) and is disposed between the two vertical support frames (421) and near the base (423).

4. The back frame (42) for an LED display screen according to claim 1, **characterized in that**: each of the second support bar (122; 426) is arranged with a plurality of through-holes (1224) at intervals in its length direction, two ends of each first support bar (121; 425) are respectively provided with a plugging hole (1211); each second support bar (122; 426) comprises a top plate (1220), a bottom plate (1221) opposite to the top plate (1220), and two opposite side plates (1222) which are vertically connected with the bottom plate (1221) and the top plate (1220), and the through-holes (1224) of each second support bar (122; 426) extend through the top plate (1220) and the bottom plate (1221) of the second support bar (122; 426).

5. The back frame (42) for an LED display screen according to claim 1, **characterized in that**: a plurality of B-shaped support frames (12) are provided, wherein the plurality of B-shaped support frames (12) are arranged in a length direction of the first support bar (121; 425) and in a length direction of the second support bar (122; 426), in row and column form.

6. The back frame (42) for an LED display screen according to claim 5, **characterized in that**: in the length direction of the first support bar (121; 425), two adjacent B-shaped support frames are connected with each other by two first connecting members (13) plugged into corresponding plugging holes (1211) of the two adjacent B-shaped support frame (12), and two ends of each first connecting member (13) are respectively arranged with a plugging section (130) which can be plugged into the corresponding plugging hole (1211).

7. The back frame (42) for an LED display screen according to claim 6, **characterized in that**: the plugging holes (1211) are limiting step holes, and correspondingly, the plugging section (130) of the first connecting member (13) is a limiting step section.

8. The back frame (42) for an LED display screen according to claim 5, **characterized in that**: in the length direction of the second support bar (122; 426), two adjacent first support bars (121; 425) of two adjacent B-shaped support frames (12) are clamped by two second connecting members (14).

9. A large-screen LED display screen, **characterized in that**: it comprises a plurality of LED screen bodies (41) and a back frame (42) for LED display screen of any one of claims 1-8, wherein the plurality of LED screen bodies (41) are removably mounted on the back frame (42) for the LED display screen.

## Patentansprüche

1. Rückseitiger Rahmen (42) für einen LED-Anzeigebildschirm, wobei er zwei Tragestrukturen (420) und einen Bodenträger (424) umfasst, wobei die zwei Tragestrukturen (420) gegenüberliegend in einem Abstand angeordnet sind, und wobei zwei Enden des Bodenträgers (424) jeweils lösbar mit den zwei Tragestrukturen (420) verbunden sind; **dadurch gekennzeichnet, dass**
jede Tragestruktur (420) zwei vertikale Tragerahmen (421), eine Vielzahl von transversalen Verbindungsrahmen (422), eine Basis (423), und eine Vielzahl an ersten Verbindungsteilen (4211) umfasst, wobei die zwei vertikalen Tragerahmen (421) vertikal und gegenüberliegend auf der Basis (423) angeordnet sind, wobei der vertikale Tragerahmen (421) eine Vielzahl an Tragerahmeneinheiten (4210), welche nacheinander in vertikaler Richtung angeordnet sind, und Vielzahl an ersten Verbindungsteilen (4211) umfasst; wobei in vertikaler Richtung zwei benachbarte Tragerahmeneinheiten (4210) mittels zwei ersten Verbindungselementen (4211) verbunden sind, und wobei die Vielzahl an transversalen Verbindungsrahmen (422) horizontal zwischen zwei vertikalen Tragerahmen (421) angeordnet sind, nacheinander von oben nach unten;
wobei die zwei Tragestrukturen (420) gegenüberliegend derart angeordnet sind, dass die vier Tragerahmen (421) der zwei Tragestrukturen (420) in vier parallelen Ebenen liegen;
wobei die Tragerahmeneinheiten (4210) und die transversalen Verbindungsrahmen (422) B-förmige Tragerahmen (12) sind, wobei der B-förmige Tragerahmen (12) zwei erste Tragestege (121; 425) und drei zweite Tragestege (122; 426) umfasst, wobei die zwei ersten Tragestege (121; 425) und zwei der zweiten Tragestege (122; 426) alternierend und senkrecht mit den Enden aneinander verbunden sind, und wobei der andere zweite Tragesteg (122; 426) senkrecht mit den Mitten der zwei ersten Tragestege (121; 425) verbunden ist;
wobei die zwei Tragestrukturen (420) jeweils einen untersten transversalen Verbindungsrahmen (422) aufweisen, wobei einer der ersten Tragestege (425) jedes untersten transversalen Verbindungsrahmens (422) einer äußeren Seite einer vorderen Endfläche des zugehörigen vertikalen Tragerahmens (421) ausgesetzt ist, wobei beide Enden des Bodenträgers (424) lösbar mit einem der ersten Tragestege (425) verbunden ist.

2. Rückseitiger Rahmen (42) für einen LED-Anzeigebildschirm nach Anspruch 1, **dadurch gekennzeichnet, dass**: die Basis (423) zwei Trageuntergestelle (4230) umfasst, welche gegenüberliegend angeordnet sind, und jeweils jedes Trageuntergestell (4230) senkrecht zu und lösbar mit der untersten Tragestruktureinheit (4210) von einer der vertikalen Tragerahmen (421) mittels zwei zweiten Verbindungsteilen (44) verbunden ist.

3. Rückseitiger Rahmen (42) für einen LED-Anzeigebildschirm nach Anspruch 1, **dadurch gekennzeichnet, dass**: der rückseitige Rahmen (42) für den LED-Anzeigebildschirm weiter zwei Gewichtsboxen (427) umfasst, wobei jede von ihnen auf einer Tragestruktur (420) angeordnet ist und zwischen den zwei vertikalen Tragerahmen (421) und nahe der Basis (423) angeordnet ist.

4. Rückseitiger Rahmen (42) für einen LED-Anzeigebildschirm nach Anspruch 1, **dadurch gekennzeichnet, dass**: jeder zweite Verbindungssteg (122; 426) mit einer Vielzahl an Durchgangslöchern (1224) in Abständen in seiner Längenrichtung ausgebildet ist, wobei zwei Enden jedes ersten Tragestegs (121; 425) jeweils mit einem Stopfenloch (1211) bereitgestellt sind; wobei jeder zweite Tragesteg (122; 426) eine obere Platte (1220), eine untere Platte (1221), welche der oberen Platte (1220) gegenüberliegt, und zwei gegenüberliegende Seitenplatten (1222) umfasst, welche senkrecht mit der unteren Platte (1221) und der oberen Platte (1220) verbunden ist, und wobei die Durchgangslöcher (1224) jedes zweiten Tragestegs (122; 426) durch die obere Platte (1220) und der unteren Platte (1221) des zweiten Tragestegs (122; 426) hindurch erstreckt.

5. Rückseitiger Rahmen (42) für einen LED-Anzeigebildschirm nach Anspruch 1, **dadurch gekennzeichnet, dass**: eine Vielzahl von B-förmigen Tragerahmen (12) bereitgestellt sind, wobei die Vielzahl an B-förmigen Tragerahmen (12) in einer Längenrichtung des ersten Tragestegs (121; 425) und in einer Längenrichtung des zweiten Tragestegs (122; 426) angeordnet sind, in Reihen- und Spaltenform.

6. Rückseitiger Rahmen (42) für einen LED-Anzeigebildschirm nach Anspruch 5, **dadurch gekennzeichnet, dass**: in der Längenrichtung des ersten Tragestegs (121; 425) zwei benachbarte B-förmige Tragerahmen miteinander durch zwei erste Verbindungsteile (13) verbunden sind, welche in entsprechende Stopfenlöcher (1211) der zwei benachbarten B-förmigen Tragerahmen gestopft sind, und wobei zwei Enden jedes ersten Verbindungsteils (13) jeweils mit einem Stopfenabschnitt (130) ausgebildet sind, welcher in das entsprechende Stopfenloch (1211) gestopft werden kann.

7. Rückseitiger Rahmen (42) für einen LED-Anzeigebildschirm nach Anspruch 6, **dadurch gekennzeichnet, dass**: die Stopfenlöcher (1211) begrenzende Stufenlöcher sind, und entsprechend der Stopfenabschnitt (130) des ersten Verbindungsteils (13) ein begrenzender Stufenabschnitt ist.

8. Rückseitiger Rahmen (42) für einen LED-Anzeigebildschirm nach Anspruch 5, **dadurch gekennzeichnet, dass**: in der Längenrichtung des zweiten Tragestegs (122; 426) zwei benachbarte erste Tragestege (121; 425) zweier benachbarter B-förmiger Tragerahmen (12) mittels zwei zweiten Verbindungsteilen (14) eingespannt sind.

9. Großbildschirm LED-Anzeigebildschirm, **dadurch gekennzeichnet, dass**: er eine Vielzahl an Bildschirmkörpern (41) und einen rückseitigen Rahmen (42) für einen LED-Anzeigebildschirm nach einem der Ansprüche 1-8 umfasst, wobei die Vielzahl an LED-Bildschirmkörpern (41) lösbar an dem rückseitigen Rahmen (42) für den LED-Anzeigebildschirm montiert sind.

## Revendications

1. Cadre arrière (42) pour un écran d'affichage à DEL, selon lequel il comprend deux structures de support (420) et une poutre inférieure (424), les deux structures de support (420) étant disposées de manière opposée à un intervalle, et deux extrémités de la poutre inférieure (424) étant reliées de manière détachable aux deux structures de support (420), respectivement ;
**caractérisé par le fait que**
chaque structure de support (420) comprend deux cadres de support verticaux (421), une pluralité de cadres de liaison transversaux (422), une base (423), et une pluralité de premiers éléments de liaison (4211), les deux cadres de support verticaux (421) sont disposés verticalement et de manière opposée sur la base (423), le cadre de support vertical (421) comprend une pluralité d'unités de cadre de support (4210) disposées successivement dans une direction verticale et une pluralité de premiers éléments de liaison (4211) ; dans une direction verticale, deux unités de cadre de support adjacentes (4210) sont reliées par deux premiers éléments de liaison (4211), et la pluralité de cadres de liaison transversaux (422) sont disposés horizontalement entre les deux cadres de support verticaux (421), successivement de haut en bas ; les deux structures de support (420) étant disposées de manière opposée de manière à ce que les quatre cadres de support (421) des deux structures de support (420) s'étendent dans quatre plans parallèles ;
les unités de cadre de support (4210) et les cadres de liaison transversaux (422) étant des cadres de support en forme de B (12), le cadre de support en forme de B (12) comprenant deux premières barres de support (121 ; 425) et trois secondes barres de support (122 ; 426), les deux premières barres de support (121 ; 425) et deux des secondes barres de support (122 ; 426) étant alternativement et verticalement reliées bout à bout, et l'autre seconde barre de support (122 ; 426) étant verticalement reliée aux milieux des deux premières barres de support (121 ; 425) ;
les deux structures de support (420) ayant chacune un cadre de liaison transversal le plus bas (422), une des premières barres de support (425) de chaque cadre de liaison transversal le plus bas (422) étant exposée à un côté extérieur d'une face d'extrémité avant du cadre de support vertical correspondant (421), les deux extrémités de la poutre inférieure (424) étant reliées de manière amovible avec l'une des premières barres de support (425).

2. Cadre arrière (42) pour un écran d'affichage à DEL selon la revendication 1, **caractérisé par le fait que** : la base (423) comprend deux sous-cadres de support (4230) qui sont disposés de manière opposée, et respectivement, chaque sous-cadre de support (4230) est relié verticalement et de manière amovible à l'unité de cadre de support la plus basse (4210) de l'un des cadres de support verticaux (421) par deux seconds éléments de liaison (44).

3. Cadre arrière (42) pour un écran d'affichage à DEL selon la revendication 1, **caractérisé par le fait que** : le cadre arrière (42) pour l'écran d'affichage à DEL comprend en outre deux boîtes de lest (427), chacune desquelles est disposée sur une structure de support (420) et est disposée entre les deux cadres de support verticaux (421) et près de la base (423).

4. Cadre arrière (42) pour un écran d'affichage à DEL selon la revendication 1, **caractérisé par le fait que** : chacune des secondes barres de support (122 ; 426) est agencée avec une pluralité de trous traversants (1224) à intervalles dans sa direction de longueur, deux extrémités de chaque première barre de support (121 ; 425) comportent respectivement un trou de branchement (1211) ; chaque seconde barre de support (122 ; 426) comprend une plaque supérieure (1220), une plaque inférieure (1221) à l'opposé de la plaque supérieure (1220), et deux plaques latérales opposées (1222) qui sont reliées verticalement avec la plaque inférieure (1221) et la plaque supérieure (1220), et les trous traversants (1224) de chaque seconde barre de support (122 ; 426) s'étendent à travers la plaque supérieure (1220) et la plaque inférieure (1221) de la seconde barre de support (122 ; 426).

5. Cadre arrière (42) pour un écran d'affichage à DEL selon la revendication 1, **caractérisé par le fait que** : une pluralité de cadres de support en forme de B (12) sont prévus, la pluralité de cadres de support en forme de B (12) étant disposés dans une direction de longueur de la première barre de support (121 ; 425) et dans une direction de longueur de la seconde barre de support (122 ; 426), sous la forme de lignes et de colonnes.

6. Cadre arrière (42) pour un écran d'affichage à DEL selon la revendication 5, **caractérisé par le fait que** : dans la direction de longueur de la première barre de support (121 ; 425), deux cadres de support en forme de B adjacents sont reliés l'un à l'autre par deux premiers éléments de liaison (13) branchés dans des trous de branchement correspondants (1211) des deux cadres de support en forme de B adjacents (12), et deux extrémités de chaque premier élément de liaison (13) sont respectivement agencées avec une section de branchement (130) qui peut être branchée dans le trou de branchement correspondant (1211).

7. Cadre arrière (42) pour un écran d'affichage à DEL selon la revendication 6, **caractérisé par le fait que** : les trous de branchement (1211) sont des trous à épaulement de limitation, et de manière correspondante, la section de branchement (130) du premier élément de liaison (13) est une section à épaulement de limitation.

8. Cadre arrière (42) pour un écran d'affichage à DEL selon la revendication 5, **caractérisé par le fait que** : dans la direction de longueur de la seconde barre de support (122 ; 426), deux premières barres de support adjacentes (121 ; 425) de deux cadres de support en forme de B adjacents (12) sont serrées par deux seconds éléments de liaison (14).

9. Ecran d'affichage à DEL grand écran, **caractérisé par le fait que** : il comprend une pluralité de corps d'écran à DEL (41) et un cadre arrière (42) pour écran d'affichage à DEL selon l'une quelconque des revendications 1 à 8, dans lequel la pluralité de corps d'écran à DEL (41) sont montés de manière amovible sur le cadre arrière (42) pour l'écran d'affichage à DEL.
